Europäisches Patentamt

European Patent Office

Office européen des brevets

(11) Publication number: **0 232 024**
**A2**

# EUROPEAN PATENT APPLICATION

(21) Application number: **87300325.5**

(22) Date of filing: **15.01.87**

(51) Int. Cl.⁴: **C 08 L 83/06**
**C 09 D 3/82, C 09 J 3/16,**
**C 09 K 3/10, C 09 K 3/18,**
**D 06 M 15/643, B 29 C 33/64**

(30) Priority: **18.01.86 JP 8556/86**

(43) Date of publication of application:
**12.08.87 Bulletin 87/33**

(84) Designated Contracting States: **DE FR GB**

(71) Applicant: **SHIN-ETSU CHEMICAL CO., LTD.**
**Asahitokai Bldg. 6-1 Otemachi 2-chome**
**Chiyoda-ku Tokyo 100 (JP)**

(72) Inventor: **Takago, Toshio**
**94-7, yanase**
**Annaka-shi Gunma-ken (JP)**

**Okami, Takehide**
**10-28, Isobe 3-chome**
**Annaka-shi Gunma-ken (JP)**

**Yamamoto, Yasushi**
**992-4, yawato-cho**
**Takasaki-shi Gunma-ken (JP)**

**Yamaguchi, Koichi**
**1-12-22, yachiyo-cho**
**Takasaki-shi Gunma-ken (JP)**

(74) Representative: **Bizley, Richard Edward et al**
**BOULT, WADE & TENNANT 27 Furnival Street**
**London EC4A 1PQ (GB)**

(54) Room temperature-curable organopolysiloxane composition.

(57) A room temperature-curable organopolysiloxane of the so-called dealcoholation type comprising an $\alpha.\omega$-dihydroxy diorganopolysiloxane. an alkoxy silane compound as a cross-linking agent and a curing catalyst. The crosslinking agent in the inventive composition is of the formula $R_{4-a}Si(OR_f)_a$ . wherein $R_f$ is $-CH_2CF_3$ or $CH(CF_3)_2$ and a is 2.3 or 4 or is a partial hydrolysis product of such a compound. and the curing catalyst is an organic tin compound. By virtue of this unique formulation. the inventive composition is greatly improved in respect of the curability and storage stability so that the curing behavior of the composition and the mechanical properties of the cured silicone rubber thereof are little affected by storage for 6 months or longer.

EP 0 232 024 A2

**Description**

## ROOM TEMPERATURE-CURABLE ORGANOPOLYSILOXANE COMPOSITION

The present invention relates to a room temperature-curable organopolysiloxane. More particularly, the invention relates to a room temperature-curable organopolysiloxane composition useful as an adhesive of electric and electronic parts as well as a sealing agent, caulking agent or coating material on various kinds of substrate materials.

Various types of room temperature-curable organopolysiloxane compositions, referred to as RTV compositions hereinbelow, are known in the prior art and they are classified into several classes depending on the mechanism of the crosslinking reaction by which the composition is cured and converted into a silicone rubber elastomer at room temperature. RTV compositions of industrial importance include of the so-called dealcoholation type curable by the mechanism of dealcoholation condensation to form an alcohol as the condensation product. RTV compositions of this type are advantageous in respect of the high adhesivensss to the substrate surface on which the composition has been cured and in respect of the absence of any corrosive material produced by the curing reaction so that they are widely used as an adhesive and coating material, in particular, in electric and electronic industries for metal-made parts susceptible to corrosion.

The dealcoholation type RTV compositions of the prior art, however, have several problems and disadvantages. For example, the curing speed thereof is usually so low that complete curing can hardly be cbtained, in particular, in the core portion of a thick body. Furthermore, the RTV compositions have relatively poor storage stability resulting in incomplete curing of the composition when it is used after storage for a length of time even in an anhydrous condition.

Various attempts and proposals have been made in the prior art to improve the dealcoholation type RTV compositions in these respects. For example, a method is proposed in which the RTV composition is admixed with a special organosilane compound having two alkoxy groups in a molecule as a so-called silane scavenger with the object of improving the curability and storage stability. This method, however, is practically disadvantageous. Namely, the silane compound must be prepared separately from the other ingredients of the composition so that substantial increase is unavoidable in the costs. Furthermore, sufficient improvement in the storage stability can be obtained only when the silane compound has a highly reactive hydrolyzable group such as amido and amino groups in addition to the two alkoxy groups while such a silane compound is responsible for the emission of a corrosive gas or offensive odor so that the REV composition admixed with such an additive cannot be used as an adhesive in the electric and electronic industries.

The room temperature-curable organopolysiloxane composition of the present invention comprises:

(A) 100 parts by weight of a diorganopolysiloxane terminated at both molecular chain ends with a silanolic hydroxy group;

(B) from 1 to 30 parts by weight of an organosilane compound represented by the general formula

$$R_{4-a}Si(OR_f)_a , \ldots\ldots (I)$$

in which R is a monovalent hydrocarbon group, $R_f$ is a 2,2,2-trifluoroethyl group of the formula $-CH_2CF_3$ or a di(trifluoromethyl) methyl group of the formula $-CH(CF_3)_2$ and the subscript a is 2,3 or 4, or a partial hydrolysis product of such an organosilane compound; and

(C) from 0.01 to 10 parts by weight of an organic tin compound.

As will be understood from the above given summary of the invention, the most characteristic feature of the inventive RTV composition consists in the component (B), which is a kind of alkoxy-containing organosilane compound. While an alkoxy-containing organosilane compound is an essential ingredient in the RTV composition of the dealcoholation type, it has been discovered by the extensive investigations undertaken by the inventors that the poor curability and storage stability of the conventional RTV composition of the dealcoholation type are mainly due to the low reactivity of the alkoxy groups in the alkoxy-containing organosilane compound formulated therein to react with the silanolic hydroxy groups at the molecular chain ends of the diorganopolysiloxane and the moisture content in the filler so that a considerable amount of the silanolic hydroxy groups are left unreacted.

The fluorine-substituted alkoxy group $-OR_f$ in the component (B) of the invention RTV composition as the crosslinking agent is highly reactive with the silanolic hydroxy groups, in particular, in the presence of an organic tin compound of the component (C) as the curing catalyst so that the RTV composition is imparted with greatly improved curability and storage stability. Moreover, the condensation product produced by the crosslinking reaction in the inventive composition has no toxicity nor corrosiveness so that the invention RTV composition can be used in any applications in which conventional RTV compositions of the dealcoholation type are usable.

The component (A) as the main ingredient of the inventive RTV composition is a diorganopolysiloxane having a substantially linear molecular structure and terminated at both molecular chain ends with a silanolic hydroxy group, i.e. a hydroxy group directly bonded to the silicon atom at the molecular chain end. The diorganopolysiloxane, which should typically be an $\alpha,\omega$-dihydroxy diorganopolysiloxane having a substantially linear molecular structure, is generally represented by the average unit formula $R^1{}_aSiO_{(4-b)/2}$, in which $R^1$ is a monovalent hydrocarbon group and the subscript b is a positive number from 1.90 to 2.05. The monovalent hydrocarbon group $R^1$ is exemplified by alkyl groups, e.g. methyl, ethyl, propyl, butyl, 2-ethylbutyl and octyl groups, cycloalkyl groups, e.g. cyclohexyl and cyclopentyl groups, alkenyl groups, e.g. vinyl, allyl and hexenyl groups, aryl groups, e.g. phenyl, tolyl, xylyl, naphthyl and diphenyl groups, and aralkyl groups, e.g. benzyl and 2-phenylethyl groups. These hydrocarbon groups may optionally be substituted for a part or all of the hydrogen atoms therein by halogen atoms, cyano groups and other substituents exemplified by chloromethyl, 3,3,3-trifluoropropyl, 2-cyanoethyl and 3-cyanopropyl groups. The diorganopolysiloxane as the component (A) should generally have a viscosity of at least 25 centistokes at 25 °C in order that the cured product of the composition may have rubbery elasticity and excellent mechanical strength.

The inventive RTV composition may contain, in addition to the above described silanol-terminated diorganopolysiloxane, another diorganopolysiloxane having no terminal silanol groups but terminated with, for example, trimethyl silyl groups although the amount thereof does not exceed the amount of the silanol-terminated diorganopolysiloxane as the component (A).

The component (B) in the inventive RTV composition is the fluorine-containing alkoxy silane compound represented by the general formula (I) given above or a partial hydrolysis product thereof. This component serves as a crosslinking agent by reacting with the terminal silanol groups at the molecular chain ends of the component (A) and also serves to improve the storage stability of the composition by reacting with the moisture content in the filler. In the general formula, the symbol R has the same meaning as $R^1$ in the average unit formula representing the diorganopolysiloxane as the component (A). $R_f$ in the formula denotes a fluorine-substituted alkyl group which is a 2,2,2-trifluoroethyl group $-CH_2CF_3$ or a di(trifluoromethyl)methyl group $-CH(CF_3)_2$. The subscript a is a positive integer of 2, 3 or 4.

Exemplary of the fluorine-substituted alkoxy silane compound suitable as the component (B) are those expressed by the following structural formulas, in which the symbols Me, Et, Pr, Vi and Ph denote methyl, ethyl, propyl vinyl and phenyl groups, respectively: $MeSi(OCH_2CF_3)_3$; $Et(OCH_2CF_3)_3$; $PrSi(OCH_2CF_3)_3$; $ViSi(OCH_2CF_3)_3$; $PhSi(OCH_2CF_3)_3$; $CF_3C_2H_4Si(OCH_2CF_3)_3$; $MeSi[OCH(CF_3)_2]_3$; $EtSi[OCH(CF_3)_2]_3$; $PrSi[OCH(CF_3)_2]_3$; $ViSi[OCH(CF_3)_2]_3$; $PhSi[OCH(CF_3)_2]_3$; $CF_3C_2H_4Si[OCH(CF_3)_2]_3$; $Me_2Si(OCH_2CF_3)_2$; $Et_2Si(OCH_2CF_3)_2$; $ViMeSi(OCH_2CF_3)_2$; $Me_2Si[OCH(CF_3)_2]_2$; $Ph_2Si(OCH_2CF_3)_2$; $ViMeSi[OCH(CF_3)_2]_2$; $Si(OCH_2CF_3)_4$; and $Si[OCH(CF_3)_2]_4$. Partial hydrolysis products of these fluorine-substituted alkoxy silane compounds can be used as the component (B) in place of the silane compound per se.

The amount of the component (B) in the inventive RTV composition should be in the range from 1 to 30 parts by weight or, preferably, from 3 to 10 parts by weight per 100 parts by weight of the component (A). When the amount thereof is somewhat smaller than the above mentioned lower limit, gelation may sometimes take place in the composition under preparation or during storage while too small an amount thereof results in incomplete curing of the composition. When the amount thereof is too large, on the other hand, the composition may exhibit unduly large shrinkage by curing and the cured product may have low rubbery elasticity. The fluorine-substituted alkoxy silane compound of the general formula (I) can readily be synthesized by the dehydrochlorination reaction between a fluorine-substituted alcohol, i.e. $CF_3CH_2OH$ or $(CF_3)_2CHOH$, and an organochlorosilane $R_{4-a}SiCl_a$ so that various kinds of the fluorine-substituted alkoxy silane compounds are obtained at a relatively low cost.

The component (C) in the inventive RTV composition is an organic tin compound which serves as a catalyst to promote the condensation reaction between the components (A) and (B). Any of the known organic tin compounds used in conventional RTV compositions of the dealcoholation type can be used without particular limitations including tin salts of carboxylic acids such as tin naphthenate, tin caprylate and tin oleate and organotin compounds such as dibutyl tin diacetate, dibutyl tin dioctoate, dibutyl tin dilaurate, dibutyl tin dioleate, diphenyl tin diacetate, dibutyl tin oxide, dibutyl tin dimethoxide and dibutyl tin dibenzylmaleate. The amount of the component (C) in the inventive RTV composition should be in the range from 0.01 to 10 parts by weight or, preferably, from 0.1 to 2 parts by weight per 100 parts by weight of the component (A). When the amount thereof is too small, sufficiently high catalytic activity can hardly be exhibited as a matter of course so that an unduly long time is taken for full curing of the composition and, in particular, the core portion of a thick body of the composition may remain as incompletely cured. When the amount of the catalyst is too large, on the other hand, the storage stability of the composition may be somewhat decreased.

The RTV composition of the invention can be prepared by uniformly blending the above described components (A), (B) and (C). Optionally the inventive RTV composition may be compounded with a substantial amount of a filler. Suitable fillers include siliceous fillers, e.g. finely pulverized quartz and fused quartz glass, fumed silica, precipitated silica and diatomaceous earth, metal oxides, e.g. iron oxide, zinc oxide and titanium dioxide, metal carbonates. e.g. calcium carbonate, magnesium carbonate and zinc carbonate, asbestos, glass wool. carbon black, fine flakes of mica and fine powders of plastics, e.g. polystyrene, polyvinyl chloride and polypropylene, as well as the powders surface-treated with an organosilane compound. It is desirable that the filler is thoroughly dried prior to use. The amount of the filler in the inventive RTV composition is not particularly limited and will depend on the intended application of the composition.

It is further optional that the inventive RTV composition is admixed with various kinds of known additives used in conventional RTV compositions according to need including thixotropy modifiers such as polyethylene glycol and derivatives thereof, pigments. dyes, aging retarders, antioxidants, antistatic agents, flame retardants such as antimony oxide and chlorinated paraffins. thermal conductivity improvers such as boron nitride and aluminum oxide. adhesion improvers or coupling agents such as the so-called carbon-functional silanes having a functional group, e.g. amino, epoxy and mercapto groups, metal salts of carboxylic acids, metal alcoholates and so on. It is also optional that the inventive RTV composition is dissolved in or diluted with an organic solvent such as hydrocarbon solvents, e.g. toluene and petroleum ether, ketones, esters and the

3

like.

The inventive RTV composition serves as an excellent adhesive for various kinds of substrate materials or, in particular, metals. Accordingly, the RTV composition of the invention is useful not only as an adhesive for electric and electronic parts but also as a sealing agent, caulking agent, coating agent, water-repellent agent and mold-release agent on various kinds of substrate materials as well as a fiber finishing agent.

In the following, the RTV composition of the invention is described in more detail by way of examples preceded by the description of the synthetic preparation of the fluorine-substituted alkoxy silane compounds used as the component (B). The term "parts" appearing hereinbelow always refers to "parts by weight" and the values of viscosity are obtained by measurement at 25°C.

Preparation 1. Methyl tris(trifluoroethoxy) silane

Into a three-necked flask of 1 liter capacity were put 150 g of methyl trichlorosilane and 400 g of 2,2,2-trifluoroethyl alcohol were added dropwise into the silane in the flask kept at 30 to 50 °C over a period of 1 hour to effect the dehydrochlorination reaction. After completion of the dropwise addition of the reactant, the reaction mixture was further agitated for one additional hour at about 50 °C to complete the reaction followed by the addition of 200 g of urea and further continued agitation for 30 minutes. Thereafter, the reaction mixture was filtered and the filtrate was distilled to give 240 g of a fraction boiling at 147 °C and having a specific gravity of 1.40 and a refractive index of 1.310, which could be identified to be methyl tris(trifluoroethoxy) silane of the formula $MeSi(OCH_2CF_3)_3$.

Preparation 2. Vinyl tris(trifluoroethoxy)silane

The synthetic procedure was substantially the same as in Preparation 1 described above except that 150 g of the methyl trichlorosilane were replaced with 162 g of vinyl trichlorosilane to give 245 g of vinyl tris(trifluoroethoxy) silane of the formula $ViSi(OCH_2CF_3)_3$ boiling at 151 °C and having a specific gravity of 1.38 and a refractive index of 1.322.

Preparation 3. Vinyl tris[di(trifluoromethyl) methoxy] silane

Into a three-necked flask of 1 liter capacity were introduced 605 g of di(trifluoromethyl)methyl alcohol and 200 g of urea and then 162 g of vinyl trichlorosilane were added dropwise over a period of 1 hour into the mixture in the flask kept at 30 to 50 °C to effect the dehydrochlorination reaction. After further agitation of the reaction mixture at 50 °C for one additional hour to complete the reaction, the mixture was filtered and the filtrate was distilled to give 361 g of vinyl tris[di(trifluoromethyl) methoxy] silane boiling at 149 °C and having a specific gravity of 1.573 and refractive index of 1.2994.

Example 1.

A base compound was prepared by uniformly blending 100 parts of a dimethylpolysiloxane having a viscosity of 20,500 centistokes and terminated at both molecular chain ends with a silanolic hydroxy group with 10 parts of a fumed silica filler after surface treatment with a methylpolysiloxane having trimethyl silyl groups. The base compound is then admixed with 6 parts of the methyl tris(trifluoroethoxy) silane prepared in Preparation 1 and 0.3 part of dibutyl tin dioctoate in an anhydrous condition to give a room temperature curable organopolysiloxane composition I.

The RTV composition I prepared in the above described manner is shaped by extrusion molding into a sheet of 2 mm thickness, which was kept standing for 7 days at 23 °C in an atmosphere of a relative humidity of 55% so that the sheet was cured and converted into a silicone rubber sheet. Table 1 below gives the mechanical properties of the rubber sheet measured according to the procedure specified in JIS K 6301.

The RTV composition I was kept for 6 months at room temperature in a hermetically sealed condition but no change was noted in the milky white, translucent appearance of the composition. The RTV composition I after 6 months of storage was shaped and cured into a silicone rubber sheet in the same manner as above and the mechanical properties thereof were measured to give the results shown in Table 1. As is clear from the results in Table 1, storage for 6 months had little influences on the curability of the composition and the mechanical properties of the cured silicone rubber thereof.

Example 2.

An RTV composition, referred to as the composition II hereinbelow, was prepared in the same manner as the composition I in Example 1 except that 6 parts of the methyl tris(trifluoroethoxy) silane were replaced with 7 parts of vinyl tris(trifluoroethoxy) silane prepared in Preparation 2.

The tack-free time of this composition II was 5 minutes as determined according to the procedure specified in JIS A 5758. The composition II was shaped and cured into a silicone rubber sheet in the same manner as in Example 1, of which the mechanical properties were determined according to JIS K 6301 to give the results shown in Table 1. Further, the composition II was subjected to the test of corrosiveness according to the procedure specified in MIL A-46146 to find absolutely no corrosiveness.

The RTV composition II was kept for 6 months at room temperature in a hermetically sealed condition but no change was noted in the milky white, translucent appearance of the composition. The tack-free time of the composition II was also unchanged after this storage test. The composition II was shaped and cured in the same manner as in Example 1 into a cured silicone rubber sheet of which the mechanical properties were determined to give the results shown in Table 1. Appearance of corrosiveness was not found in this composition II after 6 months of storage. As is clear from these results, storage of the composition for 6 months had almost no influences on the curability of the composition and the mechanical properties of the cured silicone rubber thereof.

Example 3.

A base compound was prepared by uniformly blending 100 parts of a dimethylpolysiloxane having a viscosity of 25,000 centistokes and terminated at both molecular chain ends with a silanolic hydroxy group with 12 parts of a fumed silica filler after surface treatment with a cyclic dimethylpolysiloxane oligomer. The base compound is then admixed with 7 parts of vinyl tris(trifluoroethoxy) silane prepared in Preparation 2, 0.2 part of dibutyl tin dilaurate and 1 part of 3-aminopropyl triethoxy silane in an anhydrous condition to give an RTV composition III.

The RTV composition III was subjected to the same tests as in Example 2 either as prepared or after 6 months of storage in a hermetically sealed condition. The tack-free time was 4 minutes of the composition III as prepared and unchanged by storage. The milky white, translucent appearance of the composition was also unchanged by the storage test and absolutely no corrosiveness was found of the composition III before and after the storage test. The mechanical properties of the silicone rubber sheets obtained by curing in the same manner as in Example 1 are shown in Table 1.

Further, two partially overlaid test panels of aluminium of 25mm width were adhesively bonded together by sandwiching a 2 mm thick layer of the RTV composition III on an overlapping 10 mm long end portion of each panel and the shearing adhesive bonding strength between the panels was determined after curing of the composition III by standing for 7 days at 23 °C in an atmosphere of 55% relative humidity to give the results shown in Table 1.

Example 4.

A base compound was prepared by uniformly blending 100 parts of a methyl trifluoropropyl polysiloxane having a viscosity of 62,000 centistokes and terminated at both molecular chain ends with a silanolic hydroxy group with 10 parts of a fumed silica filler after surface treatment with an organopolysiloxane having trimethyl silyl groups. The base compound was then admixed with 6 parts of vinyl tris(trifluoroethoxy) silane prepared in Preparation 2 and 0.3 part of dibutyl tin dioctate in an anhydrous condition to give an RTV composition, which is referred to as the composition IV hereinbelow.

The composition IV was shaped and cured in the same manner as in Example 1 into a cured silicone rubber sheet of which the mechanical properties were determined to give the results shown in Table 1. Further, the thus cured rubber sheet was subjected to the test of oil resistance by dipping in an engine oil 10W-30 at 25 °C for 70 hours to find that the oil resistance was excellent with a volume expansion of only +3%.

Example 5.

An RTV composition, referred to as the composition V hereinbelow, was prepared by uniformly blending, in an anhydrous condition, 110 parts of the same base compound as prepared in Example 4, 7 parts of vinyl tris[di(trifluoromethyl) methoxy] silane prepared in Preparation 3 and 0.3 part of dibutyltin dioctate. The composition V, either as prepared or after storage for 6 months in a hermetically sealed condition, was shaped and cured in the same manner as in Example 1 into a cured rubber sheet of which the mechanical properties were measured to give the results shown in Table 1.

T a b l e  1

| RTV composition | | Hardness, JIS A | Tensile strength, kg/cm$^2$ | Ultimate elonga-tion, % | Shearing adhesive bonding, kg/cm$^2$ |
|---|---|---|---|---|---|
| As prepared | I | 25 | 18 | 410 | - |
| | II | 27 | 18 | 400 | - |
| | III | 28 | 22 | 380 | 9.6 |
| | IV | 22 | 20 | 350 | - |
| | V | 23 | 20 | 340 | - |
| After 6 months storage | I | 25 | 18 | 400 | - |
| | II | 28 | 18 | 410 | - |
| | III | 28 | 21 | 390 | 9.4 |
| | V | 23 | 20 | 330 | - |

It can be seen that we have provided RTV compositions which can be stored with stability in a hermetically sealed anhydrous condition but are rapidly cured when exposed to a moisture-containing air to be converted into a silicone rubber elastomer. The compositions are so excellent in storage stability and curability that storage even for 6 months or longer has little influences on the curing behaviour of the compositions and the mechanical properties of the cured products. Moreover, no toxic or corrosive gas is emitted from the compositions in the course of curing and the surface of metal substrates is free from rust formation when the RTV compositions are cured in contact therewith.

**Claims**

1. A room temperature-curable organopolysiloxane composition which comprises:
    (A) 100 parts by weight of a diorganopolysiloxane terminated at both molecular chain ends with a silanolic hydroxy group;
    (B) from 1 to 30 parts by weight of a fluorine-substituted alkoxy silane compound represented by the general formula
    $R_{4-a}Si(OR_f)_a$,
    in which R is a monovalent hydrocarbon group, $R_f$ is a 2,2,2-trifluoroethyl group of the formula $-CH_2CF_3$ or a di(trifluoromethyl) methyl group of the formula $-CH(CF_3)_2$ and the subscript a is 2,3 or 4, or a partial hydrolysis product of such an alkoxy silane compound; and
    (C) from 0.01 to 10 parts by weight of an organic tin compound.

2. A room temperature-curable organopolysiloxane composition as claimed in claim 1 wherein the diorganopolysiloxane terminated at both molecular chain ends with a silanolic hydroxy group is an α,ω-dihydroxy dimethylpolysiloxane having a viscosity of at least 25 centistokes at 25°C.

3. A room temperature-curable organopolysiloxane composition as claimed in claim 2 wherein the α,ω-dihydroxydimethylpolysiloxane has the average unit formula

$R_b^1 SiO_{(4-b)/2}$,

wherein $R_1$ is a monovalent hydrocarbon group and b is an integer of from 1.90 to 2.05.

4. A room temperature-curable organopolysiloxane composition as claimed in any one of the preceding claims wherein the fluorine-substituted alkoxy silane compound is methyl tris(trifluoroethoxy) silane, vinyl tris (trifluoroethoxy) silane or vinyl tris[di(trifluoromethyl) methoxy] silane.

5. A room temperature-curable organopolysiloxane composition as claimed in any one of the preceding claims wherein the amount of the component (B) is in the range of from 3 to 10 parts by weight per 100 parts by weight of the component (A).

6. A room temperature-curable organopolysiloxane composition as claimed in any one of the preceding claims wherein the amount of the component (C) is in the range from 0.1 to 2 parts by weight per 100 parts by weight of the component (A).

7. The use of a room temperature-curable organopolysiloxane composition as claimed in any one of the preceding claims as an adhesive for electric or electronic components or articles, a sealant, a caulking agent, a coating agent, a water repellant, a mold-release agent or a fiber finishing agent.